Europäisches Patentamt

European Patent Office

Office européen des brevets

(19)

(11) **EP 0 738 117 B1**

(12) **FASCICULE DE BREVET EUROPEEN**

(45) Date de publication et mention
de la délivrance du brevet:
**21.07.1999 Bulletin 1999/29**

(51) Int. Cl.⁶: **A42B 3/22**, G02B 27/01

(21) Numéro de dépôt: **95939321.6**

(86) Numéro de dépôt international:
**PCT/FR95/01449**

(22) Date de dépôt: **03.11.1995**

(87) Numéro de publication internationale:
**WO 96/13992 (17.05.1996 Gazette 1996/22)**

(54) **EQUIPEMENT DE PROTECTION POUR PILOTE D'AERONEFS MILITAIRES ET PROCEDE DE PERSONNALISATION DE L'EQUIPEMENT**

SCHUTZAUSRÜSTUNG FÜR PILOTEN VON MILITÄRFLUGZEUGEN UND VERFAHREN ZUR PERSONALISIERUNG DIESER AUSRÜSTUNG

ASSEMBLY FOR PROTECTING THE PILOT OF A MILITARY AIRCRAFT, AND METHOD FOR CUSTOMISING SAME

(84) Etats contractants désignés:
**DE GB SE**

(30) Priorité: **04.11.1994 FR 9413231**

(43) Date de publication de la demande:
**23.10.1996 Bulletin 1996/43**

(73) Titulaire: **INTERTECHNIQUE**
**F-78370 Plaisir (FR)**

(72) Inventeurs:
• **KELLER, François**
**F-91650 Breuillet (FR)**
• **BERTHEAU, Fernand**
**F-78990 Elancourt (FR)**
• **FARIN, Eric**
**F-75011 Paris (FR)**

(74) Mandataire: **Fort, Jacques**
**CABINET PLASSERAUD**
**84, rue d'Amsterdam**
**75440 Paris Cedex 09 (FR)**

(56) Documents cités:
**EP-A- 0 269 259**          **EP-A- 0 284 389**
**US-A- 3 787 109**          **US-A- 3 870 405**
**US-A- 3 923 370**

**Description**

L'invention concerne les équipements de tête pour pilotes d'aéronefs militaires (avions et hélicoptères), du type comprenant, éventuellement, un masque respiratoire oronasal et un casque ayant une coque et une visière destinée à se placer devant les yeux, généralement déplaçable par rapport à la coque, par basculement autour d'un axe qui est soit orthogonal au plan médian du casque soit parallèle à ce plan, entre une position protégeant les yeux et le visage et une position où elle dégage les yeux (voir, par exemple, US-A-3787109).

La visière doit protéger la face et les yeux, notamment en cas d'éjection. Lorsque le casque est muni d'un viseur tête haute, ce dernier projette sur la visière des symboles qui se superposent à l'environnement.

Au cours des dernières années les pilotes d'aéronefs militaires ont dû faire face à la menace des armes laser, fournissant un faisceau de lumière sensiblement monochromatique, de très grande puissance.

On a déjà proposé de protéger la rétine du pilote contre ce risque en revêtant la visière de couches minces constituant un filtre interférentiel opaque pour les longueurs d'onde connues de fonctionnement des lasers à impulsion de grande puissance. Mais la bande d'opacité et la densité de la protection des filtres interférentiels se modifie fortement en fonction de l'incidence du faisceau de lumière sur le filtre. La protection, satisfaisante lorsque le faisceau arrive face à la visière, se dégrade fortement du fait du changement d'incidence lorsque le faisceau est oblique.

L'invention vise à fournir un équipement de tête répondant mieux que ceux antérieurement proposés aux exigences de la pratique, du point de vue de la protection contre les agressions laser ; elle vise plus particulièrement à limiter les incidences possibles pour les rayons susceptibles d'atteindre la rétine, et cela sans réduire de façon appréciable l'angle solide de vision du porteur de l'équipement.

Pour atteindre ce résultat, on donne à la visière une forme telle que, lorsque la visière est en position devant le visage et les yeux, les angles d'incidence des rayons susceptibles d'atteindre la rétine par l'intermédiaire de la pupille soient inférieurs à 15°, et cela pour les deux yeux, cet angle de 15° correspondant à peu près à la limite au-delà de laquelle il y dégradation de la protection. Il suffit pratiquement que ce résultat soit atteint pour les faisceaux atteignant l'oeil dans un cône ayant un angle au sommet de 45° autour de la direction naturelle du regard. En effet, il est apparu que le pilote, lorsqu'il souhaite regarder un objet placé latéralement, tourne la tête avant que son regard fasse un angle de 20° par rapport à l'axe de la tête.

L'angle de 45° comprend cette rotation de l'oeil par rapport à sa position naturelle et la zone de l'oeil à protéger.

En règle générale, seules quelques tailles de coque de casques et de visière sont prévues. Des pilotes ayant des écartements inter-oculaires très différents (pratiquement de 52 à 72 mm) peuvent en conséquence être équipés de casques et de visières ayant une même forme extérieure prédéterminée. Il est souhaitable que la visière protéger l'utilisateur dans toute cette plage d'écarts inter-oculaire.

Dans la pratique, ce résultat sera souvent atteint en donnant à une partie centrale de la visière une forme telle que, le rayon de courbure dans le plan horizontal varie d'environ 145 mm au centre jusqu'à environ 110 mm dans les zones latérales et le rayon de courbure dans un plan vertical parallèle au plan médian du casque varie d'environ 135 mm au centre jusqu'à environ 75 mm dans les zones latérales.

En règle générale, cela conduira à constituer la visière de telle façon que tous les centres de courbure soient compris dans un volume parallélipipédique ayant une largeur de l'ordre de 30 mm et une profondeur de l'ordre de 30 mm, ce volume étant centré environ 5 mm en avant du centre du segment joignant les centres de rotation des deux yeux, et les centres de courbure s'échelonnant du centre arrière de ce volume, pour le centre de la visière, jusqu'aux bords avant de ce volume, pour les parties latérales de la visière.

Souvent, une forme sensiblement sphérique de la visière, au moins dans une zone centrale, donnera des résultats satisfaisants, avec un rayon de courbure de l'ordre de 145 mm, le centre de courbure étant situé environ 10 mm en arrière du centre du segment joignant les centres de rotation des deux yeux.

Toutefois, on pourra utiliser une forme torique dont les rayons de courbure sont d'environ 145 mm dans le plan horizontal et 135 mm dans le plan vertical médian.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1 est une vue schématique en élévation de l'équipement, avec la visière en position de protection ;
- la figure 2 est un schéma montrant en coupe verticale, le volume dans lequel doivent se placer les centres de courbure ;
- la figure 3 est une vue en coupe suivant un plan passant par les pupilles du porteur d'un masque, destinée à faire apparaître les variations d'incidence ; et le volume virtuel dans lequel doivent se placer les centres de courbure pour assurer la protection requise ;
- la figure 4 est un schéma indiquant une section horizontale de visière qui souvent sera proche de l'optimum et indiquant l'évolution des rayons et centres de courbure.

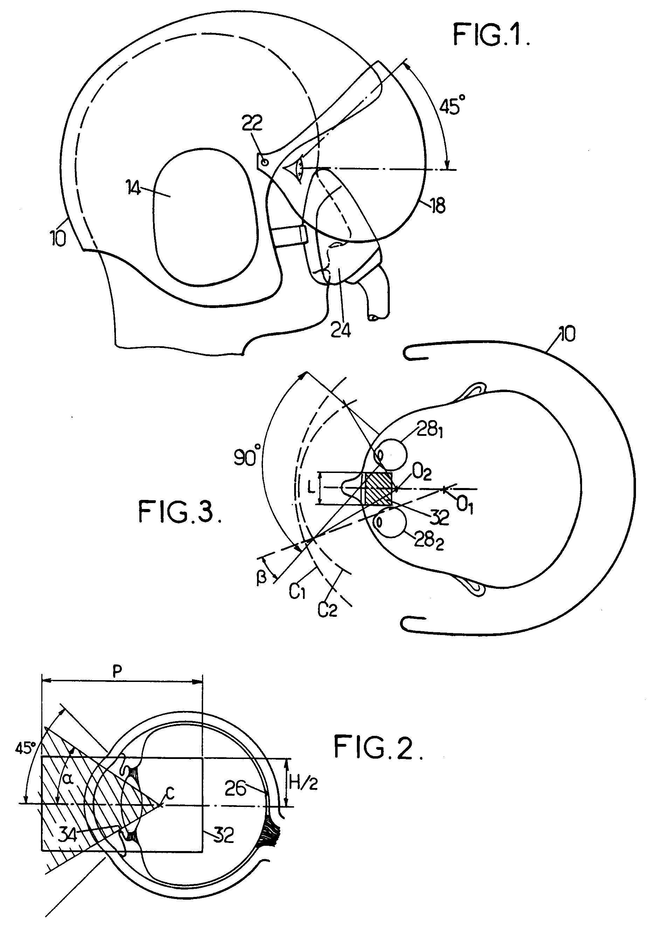

L'équipement montré sur les figures 1 et 2 comporte un casque ayant une coque 10 munie d'un rembourrage non représenté et des renflements latéraux 14 pour loger des écouteurs.

Une visière 18 est articulée sur le casque de façon à pouvoir tourner autour d'un axe horizontal 22. La visière peut ainsi être basculée entre une position haute où elle dégage les yeux et une position basse où elle les protège et éventuellement s'appuie sur un masque respiratoire 24.

L'invention serait également applicable au cas d'une visière pouvant tourner autour d'un axe parallèle au plan médian du casque, pour la dégager, ou même au cas d'une visière fixe sur le casque.

L'expérience montre que le porteur du casque, lorsqu'il veut regarder latéralement, n'utilise pas la totalité du champ visuel qu'autorise la rotation des globes oculaires. Dans la pratique, dès qu'il devrait tourner les globes oculaires au-delà d'un angle $\alpha$ d'environ 20° (figure 2) par rapport à la position naturelle, il tourne plutôt la tête. En conséquence, il suffit de munir le porteur du casque de moyens de protection contre les rayonnements situés dans un cône centré sur le centre C de rotation du globe oculaire et de demi-angle au sommet d'environ 45°, cet angle correspondant à la somme de $\alpha$ et de l'angle par rapport à l'axe de l'oeil dans lequel un rayonnement incident peut dégrader la fraction de la rétine proche de la fovéa 26.

Classiquement, on protège l'oeil contre les rayonnements dont la longueur d'onde est celle des lasers à impulsion de grande puissance qui constitue une menace en revêtant la visière 18 d'un filtre interférentiel à bande étroite centrée sur la longueur d'onde dangereuse. Mais de tels filtres n'arrêtent la longueur d'onde dangereuse que lorsqu'ils reçoivent le faisceau de lumière sous incidence normale. Toute déviation par rapport à cette incidence d'une part décale la longueur d'onde de la lumière réfléchie, d'autre part réduit l'absorption des filtres. Pratiquement, cette dégradation devient sensible dès que l'angle d'incidence dépasse 15°.

Si par exemple la visière présente, dans la partie susceptible d'être traversée par la lumière atteignant les deux yeux, une forme sphérique C1 avec un centre O1 nettement à l'arrière des yeux $28_1$ et $28_2$ (figure 3), l'oeil $28_1$ est susceptible d'être atteint par des rayons faisant un angle $\beta$ d'environ 30° avec la normale. Le risque est moins grave dans le cas de rayonnements arrivant non pas latéralement, mais d'en haut ou d'en bas, étant donné que les yeux sont au même niveau, mais il subsiste. Expérimentalement, on constate qu'une protection satisfaisante n'est obtenue que si, en chaque point de la visière, lorsque le casque et la visière sont en place sur la tête, les centres de courbure sont tous à l'intérieur d'un volume 32 en forme de parallèpipède rectangle, ayant une hauteur H, une profondeur P et une largeur L. Les valeurs H, P et L dépendent, surtout en ce qui concerne P et L, de l'intervalle inter-pupillaire qui varie, suivant les personnes, de 57 à 72 mm. La valeur la plus fréquente est proche de 62 mm.

Le centre de ce volume parallèlipipédique 32 se trouve environ 5 mm en avant du segment joignant les centres de rotation des deux yeux, eux-mêmes situés environ 10 mm en arrière des pupilles 34. Une largeur L de 30 mm et une profondeur P de 30 mm donnent en général de bons résultats.

Souvent on adoptera une visière ayant une partie centrale en forme de calotte sphérique C2 dont le centre O2 est placé environ 10 mm en arrière du centre du segment joignant les centres de rotation des deux yeux.

On pourra adopter en chaque point de la visière, des rayons de courbure différents dans un plan vertical et dans un plan passant par les centres de rotation des deux yeux. Souvent une forme torique donnera de bons résultats, avec un rayon de courbure dans un plan vertical (passant par l'axe du tore) en chaque point qui est plus faible que le rayon de courbure dans le plan horizontal. Une telle forme a l'avantage d'être réalisable de façon relativement simple.

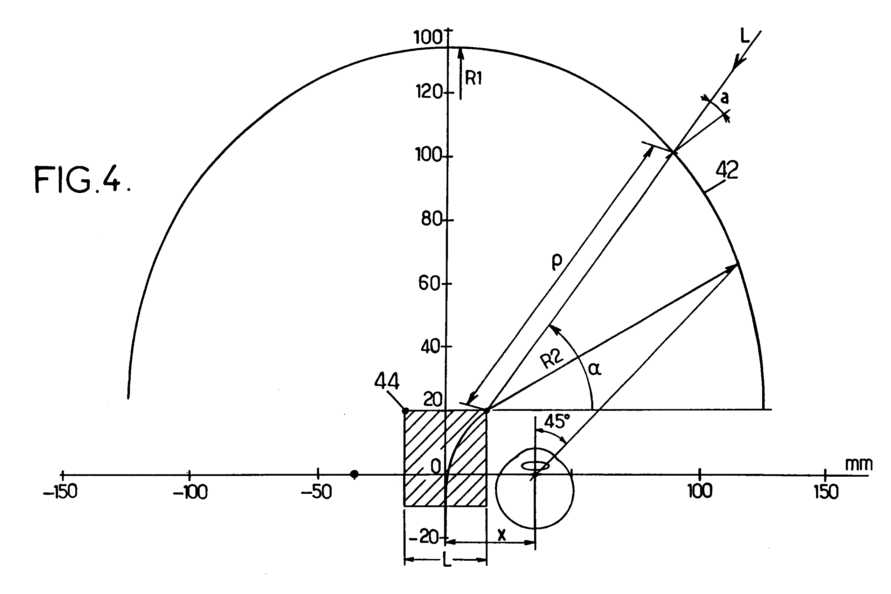

La figure 4 montre une section horizontale au niveau des yeux qui a donné de bons résultats dans de nombreux cas. Elle a été établie de façon que l'incidence maximale sur l'oeil le plus exposé soit de 15°, (l'incidence sur l'autre oeil étant toujours plus faible), dans le cas le plus défavorable, qui est celui de la distance interpupillaire maximale de 72 mm. Cette section 42 a une forme de spirale logarithmique symétrique, qui se prolonge, des deux côtés du plan médian, jusqu'aux emplacements où les tangentes sont parallèles au plan médian. Le rayon de courbure R1 au centre est de 145 mm et le rayon de courbure R2 au point dans la direction à 45° d'un oeil est de 110 mm. Le volume 44 de 30 x 35 mm dans lequel se trouvent tous les centres de courbure a été indiqué en hachures. Le lieu géométrique des centres de courbure est indiqué par une ligne dans ce volume 44.

Dans une variante simplifiée de réalisation, la partie centrale de la visière est sphérique et elle a le rayon R1, c'est-à-dire le rayon du cercle surosculateur à la spirale en son centre.

Une forme souvent acceptable consiste également à donner à la section droite au niveau des yeux une forme telle que la relation suivante soit respectée :

$$\rho = R.\exp(\alpha.tga)$$

où $R = (x_o/\sin a).\exp(-(\pi/2 + a).tg\ a)$

avec $x_o$ : semi-intervalle pupillaire maximum envisagé (généralement 36 mm),

a : angle entre le rayon de lumière incident LL atteignant l'oeil et la normale à la visière, choisi en fonction du niveau de protection à assurer (généralement 15°),

$\alpha$ : angle entre le rayon LL et la ligne inter-pupillaire.

Lorsque le casque et la visière affectés à un pilote lui sont personnels, il est fréquent de l'adapter à la tête à partir d'une coque choisie parmi trois ou quatre tailles seulement. Dans ce cas l'opération de personnalisation, constituée par la fabrication du rembourrage, permet d'ajuster la position de la visière par rapport aux yeux. La tête est immobilisée par rapport à la coque et à la visière après vérification que la condition ci-dessus (centres de courbure tous dans le volume 32 ou 44) est remplie, puis le rembourrage est constitué par remplissage de l'espace intercalaire à l'aide d'une mousse polymérisable.

**Revendications**

1. Equipement de protection de tête pour pilotes d'aéronefs militaires comprenant un casque ayant une coque et une visière destinée à se placer devant les yeux, caractérisé en ce qu'une partie centrale de la visière a une forme telle que, en chaque point, le rayon de courbure minimum soit sensiblement dans un plan vertical et que le rayon de courbure maximum soit dans un plan sensiblement orthogonal au précédent, passant à peu près par l'axe d'articulation de la visière si cet axe est horizontal, le rayon de courbure de la visière dans le plan horizontal étant compris entre 110 et 145 mm et son rayon de courbure dans un plan vertical parallèle au plan médian du casque variant d'environ 135 mm au centre jusqu'à environ 75 mm dans les zones latérales.

2. Equipement selon la revendication 1, caractérisé en ce que le rayon de courbure varie d'environ 145 mm au centre jusqu'à environ 110 mm dans les zones latérales.

3. Equipement selon la revendication 1, caractérisé en ce que la visière est telle que tous les centres de courbure soient compris dans un volume parallélépipédique ayant une largeur de l'ordre de 30 mm et une profondeur de l'ordre de 30 mm, ce volume étant centré environ 5 mm en avant du centre du segment joignant les deux yeux, et les centres de courbure s'échelonnant du centre arrière de ce volume pour le centre de la visière jusqu'aux bords avant de ce volume pour les parties latérales.

4. Equipement selon la revendication 3, caractérisée en ce que ladite partie centrale est de forme sphérique avec un rayon de courbure de l'ordre de 145 mm, le centre de courbure étant situé environ 10 mm en arrière du centre du segment joignant les centres de rotation des deux yeux.

5. Equipement selon la revendication 1 ou 3, caractérisée en ce que ladite partie centrale est de forme torique, avec des rayons de courbure d'environ 145 mm dans le plan horizontal et 135 mm dans le plan vertical médian.

6. Equipement selon la revendication 1, 2 ou 3, caractérisée en ce que la visière a une section en forme de spirale logarithmique dans un plan passant par les yeux et orienté dans la direction normale du regard.

7. Procédé de personnalisation d'un casque selon l'une quelconque des revendications précédentes, caractérisé en ce qu'on ajuste la position de la visière par rapport aux yeux en immobilisant la tête et la visière dans une position optimale et on constitue un rembourrage par remplissage de l'espace intercalaire à l'aide d'une mousse polymérisable.

**Claims**

1. Equipment for protecting the head of a military aircraft pilot, comprising a helmet having a shell and a visor that is to be placed in front of the eyes, characterized in that a central portion of the visor is of a shape such that at each point the minimum radius of curvature is substantially in a vertical plane and the maximum radius of curvature is in a plane substantially orthogonal to the preceding plane, passing close to the hinge axis of the visor if the axis is horizontal, the radius of curvature of the visor in the horizontal plane lying in the range 110 mm to 145 mm, and its radius of curvature in a vertical plane parallel to the midplane of the helmet varying between about 135 mm in the center to about 75 mm in lateral zones.

2. Equipment according to claim 1, characterized in that the radius of curvature varies from about 145 mm in the center to about 110 mm in lateral zones.

3. Equipment according to claim 1, characterized in that the visor is such that all its centers of curvature lie in a parallelepipedal volume having a length of about 30 mm and a depth of about 30 mm, said volume being centered about 5 mm in front of the center of the line segment joining the two eyes, and the centers of curvature run from the rear center of said volume in the center of the visor to the front edges of said volume for the lateral portions thereof.

4. Equipment according to claim 3, characterized in that said central portion is spherical in shape having a radius of curvature of about 145 mm, the center of curvature being situated about 10 mm behind the center of the segment interconnecting the centers of rotation of the two eyes.

5. Equipment according to claim 1 or 3, characterized in that said central portion is toroidal in shape, having radii of curvature of about 145 mm in the horizontal plane and 135 mm in the vertical midplane.

6. Equipment according to claim 1, 2, or 3, characterized in that the visor has a cross-section in the form of a logarithmic spiral in a plane containing the eyes and extending in the normal viewing direction.

7. A method of personalizing a helmet according to any preceding claim, characterized in that the position of the visor is adjusted relative to the eyes by holding the head stationary relative to the visor in an optimum position and by making padding by filling the intervening space with a polymerizable foam.

**Patentansprüche**

1. Kopfschutzausrüstung für Piloten von Militärflugzeugen, umfassend einen Helm mit einer Schale und einem Visier, welches bestimmt ist vor den Augen angeordnet zu werden, **dadurch gekennzeichnet, daß** ein mittlerer Abschnitt des Visiers eine solche Form aufweist, daß an jedem Punkt der minimale Krümmungsradius praktisch in einer vertikalen Ebene liegt, und daß der maximale Krümmungsradius in einer praktisch orthogonal zu der vorangegangenen Ebene liegt, in etwa über die Anlenkungsachse des Visiers verlaufend, wenn diese Achse horizontal verläuft, wobei der Krümmungsradius des Visiers in der horizontalen Ebene umfaßt ist zwischen 110 und 145 mm, und wobei sich der Krümmungsradius in einer vertikalen Ebene parallel zur Mittelebene des Helmes verändert von etwa 135 mm an der Mitte bis zu etwa 75 mm in den Lateralzonen.

2. Ausrüstung nach Anspruch 1, **dadurch gekennzeichnet, daß** der Krümmungsradius sich von etwa 1 45 mm an der Mitte bis etwa 110 mm in den Lateralzonen verändert.

3. Ausrüstung nach Anspruch 1, **dadurch gekennzeichnet, daß** das Visier in solch einer Weise ausgebildet ist, daß sämtliche Krümmungsmitten bzw. Krümmungszentren in einem parallelepipedförmigen Volumen enthalten sind, eine Breite in der Größenordnung von 30 mm und eine Tiefe in der Größenordnung von 30 mm aufweisend, wobei das Volumen zentriert vorliegt, etwa 5 mm vor der Mitte des Segmentes, welches die beiden Augen verbindet, wobei die Krümmungszentren von der hinteren Mitte des Volumens für die Mitte des Visiers bis zu den vorderen Rändern des Volumens für die Lateralabschnitte abgestuft vorliegen.

4. Ausrüstung nach Anspruch 3, **dadurch gekennzeichnet, daß** der mittlere Abschnitt von sphärischer Form ist, mit einem Krümmungsradius in der Größenordnung von 145 mm, wobei das Krümmungszentrum bei etwa 10 mm hinter der Mitte des Segmentes angeordnet ist, welches die Rotationszentren der zwei Augen verbindet.

5. Ausrüstung nach Anspruch 1 oder 3, **dadurch gekennzeichnet, daß** der mittlere Abschnitt eine toroidale Form aufweist, mit Krümmungsradien von etwa 145 mm in der horizontalen Ebene und von etwa 135 mm in der vertikalen Mittelebene.

6. Ausrüstung nach Anspruch 1, 2 oder 3, **dadurch gekennzeichnet, daß** das Visier eine logarithmische Spiralform in einer Ebene aufweist, welche durch die Augen tritt und ausgerichtet ist in der Richtung normal zum Blick.

7. Verfahren zur Personalisierung eines Helmes nach einem der vorangegangenen Ansprüche, **dadurch gekennzeichnet, daß** die Position des Visiers mit Bezug auf die Augen eingestellt wird, indem der Kopf und das Visier in einer optimalen Position immobilisiert werden, wobei durch die Füllung des zwischengelagerten Raumes mittels eines polymerisierbaren Schaumes eine Polsterung gebildet wird.

FIG.1.

45°

22

14

10

18

24

FIG.3.

10

90°

28₁

O₂

L

O₁

32

28₂

β

C₁

C₂

P

45°

α

34

C

26

H/2

32

FIG.2.

FIG.4.

EP 0 738 117 B1